# EUROPÄISCHE PATENTSCHRIFT

(11) **EP 0 670 534 B1**
(45) Veröffentlichungstag und Bekanntmachung des Hinweises auf die Patenterteilung: **11.11.1998**
(21) Anmeldenummer: 94810125.8
(22) Anmeldetag: 01.03.1994
(51) Int. Cl.: G05D 23/19

(54) **Regeleinrichtung für mehrere Einzelgeräte**
Controlling device for several apparatuses
Dispositif de réglage pour plusieurs appareils (uniques)

(43) Veröffentlichungstag der Anmeldung: 06.09.1995
(73) Patentinhaber: Landis & Gyr Technology Innovation AG, 6301 Zug (CH)
(72) Erfinder: Bruno, Illi, CH-6010 Kriens (CH)
(74) Vertreter: Müller, Hans-Jürgen, Dipl.-Ing.

(56) Entgegenhaltungen:
- WO-A-90/14563
- CH-A- 676 398
- DE-A- 4 134 865
- DE-A- 4 221 094
- GB-A- 2 183 068
- GB-A- 2 206 422
- US-A- 4 479 604
- US-A- 4 734 871

## Beschreibung

Die Erfindung bezieht sich auf eine aus mehreren Einzelgeräten bestehende Steuer- bzw. Regeleinrichtung gemäß dem Oberbegriff des Anspruchs 12 und ein Steuer- bzw. Regelverfahren zur Abwicklung des Datenverkehrs zwischen diesen Einzelgeräten gemäß dem Oberbegriff des Anspruchs 1.

Solche aus mehreren Einzelgeräten bestehende Steuer- bzw. Regeleinrichtungen eignen sich beispielsweise zur Steuerung von haustechnischen Anlagen wie etwa Heizungs- und Klimaanlagen. Bei sehr einfachen Anlagen, zum Beispiel bei Heizungsanlagen für ein Einfamilienhaus, ist ein zentraler Regler vorhanden, der über Drahtverbindungen mit Temperaturfühlern, beispielsweise einem Außentemperatur- und einem Raumtemperaturfühler, verbunden ist. Mit zunehmender Größe und Komplexität einer solchen Anlage steigt der Verdrahtungsaufwand stark an. Um den Verdrahtungsaufwand in Grenzen zu halten und gleichzeitig übersichtlich zu gestalten, ist es üblich, den Informationsaustausch zwischen den Einzelgeräten über einen Datenbus vorzunehmen, wie dies beispielsweise aus der GB-A-2 183 068 erkennbar ist.

Aus der CH 676 398 ist eine haustechnische Anlage bekannt, bei der die zwischen den verschiedenen Geräten auszutauschenden Daten durch Funk übertragen werden.

Bei der Installation haustechnischer Anlagen in Neubauten bietet die Verlegung der Leitungen für einen solchen Datenbus keinerlei Probleme, verursacht allerdings beträchtliche Kosten. Bei der nachträglichen Installation in bestehenden Gebäuden entstehen dagegen erhebliche Probleme und Kosten.

Der Erfindung liegt die Aufgabe zugrunde, ein Verfahren und eine Einrichtung zum Steuern bzw. Regeln nach der oben genannten Art anzugeben, welche eine sichere Kommunikation der Einzelgeräte untereinander und den Betrieb einer Steuer- bzw. Regeleinrichtung ohne großen Installationsaufwand ermöglichen.

Die genannte Aufgabe wird erfindungsgemäß durch die Merkmale den Ansprüche 1 bzw. 12 gelöst. Vorteilhafte Ausgestaltungen ergeben sich aus den abhängigen Ansprüchen.

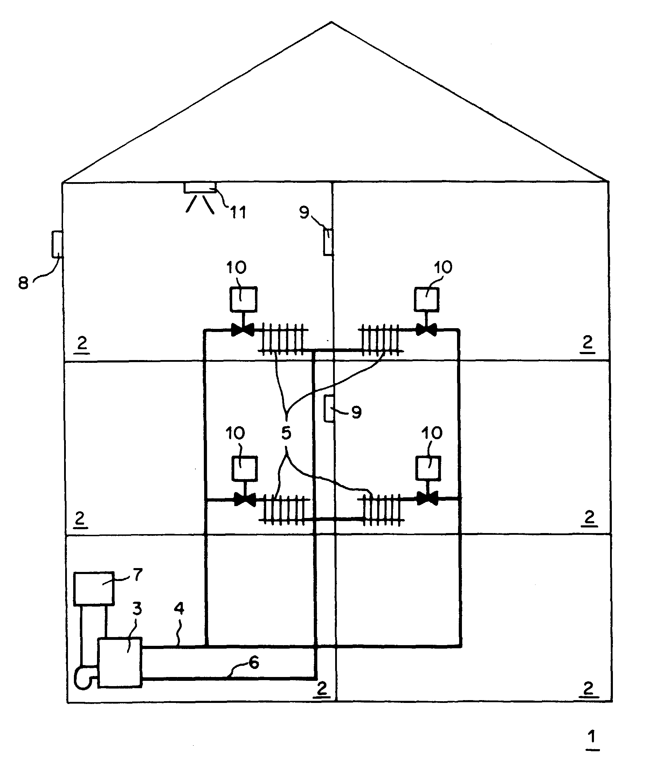

Nachfolgend wird ein Ausführungsbeispiel der Erfindung anhand der Zeichnung näher erläutert.

Die einzige Figur zeigt ein Schema einer Heizungsanlage mit einer aus Einzelgeräten bestehenden Steuer- bzw. Regeleinrichtung.

In der Figur bezeichnet 1 ein Gebäude mit einer Anzahl von Räumen 2. In einem der Räume 2 ist ein Wärmeerzeuger 3 aufgestellt, der über eine Vorlaufleitung 4 mit in Räumen 2 angeordneten Heizkörpern 5 verbunden ist. Die Heizkörper 5 sind über eine Rücklaufleitung 6 wiederum mit dem Wärmeerzeuger 3 verbunden. Der Wärmeerzeuger 3 wird gesteuert bzw. geregelt von einem Regler 7. Der Regler 7 kann so beschaffen sein, daß er zusätzlich auch noch andere Funktionen übernehmen kann als die Regelung des Wärmeerzeugers 3, beispielsweise die Verarbeitung von Notrufmeldungen oder andere Funktionen einer haustechnischen Anlage. An der Außenseite des Gebäudes 1 ist ein Witterungsfühler 8 angebracht. In einzelnen der Räume sind Raumgeräte 9 angeordnet, die beispielsweise einen Raumtemperaturfühler, einen Sollwertgeber und einen Programmschalter umfassen. An den Heizkörpern 5 sind Stellglieder 10 angebracht, die der Steuerung und/oder Messung des Wärmeträgerstroms dienen. Daneben können weitere Elemente vorhanden sein, die in einem Zusammenhang mit der haustechnischen Anlage stehen. Das kann beispielsweise ein Raumbelegungssensor 11 sein. Daneben kommen auch andere Geräte in Betracht, etwa Zutrittskontrolleinrichtungen, Notrufeinrichtungen, Brandmelder, Schaltuhren, gesteuerte Storenanlagen, Lichtfühler, Schalter und dergleichen.

Zwischen den Einzelgeräten wie Regler 7, Stellgliedern 10, Witterungsfühler 8 und Raumgeräten 9 und anderen bestehen Wirkverbindungen. So hat der Witterungsfühler 8 seinen bzw. seine Meßwerte wie Temperatur, gegebenenfalls auch Sonneneinstrahlung und/oder Windgeschwindigkeit, dem Regler 7 zu übermitteln. In gleicher Weise haben die Raumgeräte 9 Daten über die Raumtemperatur, sowohl dessen Ist- wie Sollwert, und das gewünschte Heizprogramm an den Regler 7 zu übermitteln. Umgekehrt kann der Regler 7 einem solchen Raumgerät 9 Daten übermitteln, beispielsweise den aktuellen Sollwert für die Raumtemperatur gemäß einem im Regler 7 abgelegten Zeitprogramm für die Sollwerte der einzelnen Räume 2. Ähnlicher Art ist die Kommunikation zwischen den Stellgliedern 10 und dem Regler 7. Einerseits können vom Regler 7 Stellbefehle an die Stellglieder 10 übermittelt werden, andererseits können die Stellglieder 10 Daten über ihre Stellung, aber auch über den aktuellen Wärmemengenstrom, wie er sich aus Durchflußgeschwindigkeit und Temperaturdifferenz am Heizkörper 5 ermitteln läßt, an den zentralen Regler 7 übermitteln.

Erfindungsgemäß findet die Kommunikation zwischen den Einzelgeräten wie Witterungsfühler 8, Raumgeräten 9, Stellgliedern 10, Raumbelegungssensor 11 und dergleichen mit dem zentralen Steuer- bzw. Regelgerät, wie etwa Regler 7, nicht über Drahtverbindungen, sondern über Funk statt. Damit wird erreicht, daß auch der nachträgliche Einbau einer solchen Anlage in ein schon bestehendes Gebäude oder die Ergänzung der haustechnischen Anlage ohne teuren und zeitraubenden Aufwand für elektrische Installationen erfolgen kann.

Der Aufwand für die elektrische Installation läßt sich besonders stark reduzieren, wenn einzelne der Einzelgeräte keinen Anschluß an eine Stromversorgung wie beispielsweise die übliche Netzspannung von 110 bzw. 230 Volt benötigen. Aus diesem Grund ist erfindungsgemäß wenigstens ein Teil der örtlichen getrennten Geräte batteriebetrieben. Wenigstens bei den batteriebetriebenen Geräten findet die Kommunikation über Funk statt. Bei solchen Geräten, die zur Erfüllung ihrer Aufgaben einen hohen Strombedarf haben, beispielsweise Stellantriebe, die also zweckmäßigerweise einen Netzspannungsanschluß besitzen, kann statt der Kommunikation über Funk eine drahtgebundene Kommunikation zweckmäßig sein.

Bei batteriebetriebenen Geräten ist zweckmäßigerweise darauf zu achten, daß die Batterielebensdauer möglichst groß ist, was sich dadurch erreichen läßt, daß der Stromverbrauch möglichst klein ist. Bei bekannten Einrichtungen, bei denen eine Zweiwege-Kommunikation zwischen den einzelnen Geräten erforderlich ist, ist es erforderlich, daß alle Einzelgeräte dauernd empfangsbereit sind. Dadurch entsteht ein hoher Stromverbrauch. Ist nur eine Einweg-Kommunikation erforderlich, existiert dieses Problem nicht, weil Energie nur dann benötigt wird, wenn ein Einzelgerät Daten an das zentrale Gerät senden will. In den Zeiten, da keine Daten abzusenden sind, ist die Sendeeinrichtung abgeschaltet, verbraucht also für Kommunikationszwecke keinen Strom.

Um eine Zweiwege-Kommunikation zu ermöglichen, ohne daß die Empfangseinrichtungen der batteriebetriebenen Einzelgeräte dauernd eingeschaltet sein müssen, ist erfindungsgemäß vorgesehen, daß die Kommunikation grundsätzlich immer von einem batteriebetriebenen Einzelgerät eröffnet wird. Das Einzelgerät sendet also ein Datenpaket ab, das durch das zentrale Gerät empfangbar ist. Im Anschluß an die Absendung des Datenpakets bleibt die Empfangseinrichtung des batteriebetriebenen Einzelgeräts für eine bestimmte erste Zeitspanne in Betrieb, so daß das Einzelgerät während dieser Zeitspanne seinerseits Daten vom zentralen Steuer- bzw. Regelgerät empfangen kann. Vorteilhaft ist es, wenn in dem vom Einzelgerät abgesendeten Datenpaket auch eine Information enthalten, wie groß diese erste Zeitspanne ist. Damit ist es möglich, daß das zentrale Steuer- bzw. Regelgerät im Falle des Vorliegens großer Datenmengen, die an das Einzelgerät zu senden sind, im Rahmen eines Datenpaketes nur so viele Daten überträgt, die während der zur Verfügung stehenden Zeitspanne vom Einzelgerät mit Sicherheit empfangen werden können.

Es ist vorteilhaft, wenn die erste Zeitspanne generell so groß bemessen ist, daß sie etwas größer ist als der Zeitbedarf für die Übermittlung des größten vorkommenden Datenpakets. Andererseits kann es vorteilhaft sein, die Größe der ersten Zeitspanne nicht fest vorzugeben, sondern die Empfangseinrichtung so lange in Betrieb zu lassen, solange gültige Daten eintreffen.

Im Anschluß an die erste Zeitspanne wird die Empfangseinrichtung abgeschaltet. Es ist vorteilhaft, die Dauer der Abschaltung festzulegen. Deshalb ist eine zweite Zeitspanne vorgesehen, die jene Zeit umfaßt, die zwischen dem Abschalten der Empfangseinrichtung und dem nächstfolgenden Beginn eines Sendevorgangs liegt. Die Größe dieser zweiten Zeitspanne richtet sich vorteilhafterweise nach der Art des batteriebetriebenen Einzelgeräts. Für manche derartiger Geräte, die Daten an das zentrale Steuer- bzw. Regelgerät senden, ist es typisch, daß Daten nur in relativ großen Zeitabständen übermittelt werden müssen. Bei einem Witterungsfühler beispielsweise, der ausschließlich Werte der herrschenden Außentemperatur zu senden hat, reicht es beispielsweise aus, aller 15 oder 20 Minuten den jeweils aktuellen Wert an das zentrale Steuer- bzw. Regelgerät zu senden. Dies deshalb, weil Temperaturänderungen in der freien Natur meist relativ langsam erfolgen und weil im Rahmen eines Regelalgorithmus meist ohnehin eine Bedämpfung der Außentemperatur erfolgt. Diese Bedämpfung erfolgt durch Mittelung mit zeitlich zurückliegenden Werten und berücksichtigt die Tatsache, daß Gebäude ein Wärmespeichervermögen besitzen und deshalb eine Regelung der Vorlauftemperatur aufgrund der jeweils aktuellen Außentemperatur nicht erforderlich ist.

Bei einem Vorlauftemperaturfühler kann es jedoch zweckmäßig sein, die zweite Zeitspanne erheblich kürzer zu wählen. Damit läßt sich die Genauigkeit der Regelung der Vorlauftemperatur verbessern.

Es kann auch vorteilhaft sein, die Größe der zweiten Zeitspanne von anderen Faktoren abhängig zu machen. So ist beispielsweise äußerst vorteilhaft, daß ein Raumgerät 9 den Istwert der Raumtemperatur einerseits periodisch an das zentrale Steuer-bzw. Regelgerät sendet, andererseits aber ohne Rücksicht auf die Länge der zweiten Zeitspanne sofort einen Sendevorgang beginnt, wenn die Raumtemperatur sich innert kurzer Zeit sehr schnell ändert. Damit kann erreicht werden, daß beispielsweise ein Öffnen eines Fensters bei geringen Außentemperaturen, das durch einen schnellen Abfall der Raumtemperatur gekennzeichnet ist, ohne Zeitverzug an das zentrale Steuer- bzw. Regelgerät gemeldet wird, so daß das zentrale Steuer- bzw. Regelgerät sofort in der Weise darauf reagieren kann, daß es an das Stellglied 10 des Heizkörpers 5 des entsprechenden Raumes 2 einen Befehl zum Schließen des Stellgliedes 10 übermittelt, um die Vergeudung von Heizenergie zu verhindern. Entsprechend kann ein Sendevorgang ohne Rücksicht auf die Länge der zweiten Zeitspanne sofort dann beginnen, wenn die Raumtemperatur in einer Weise ansteigt, die bei normaler Heizung unmöglich ist. Auf diese Weise läßt sich ein Raumgerät durchaus als Störungsmelder eines einfachen Brandmeldesystems benutzen.

Ein Datenpaket besteht vorteilhaft aus einer Reihe von Informationen, nämlich einer Empfängeradresse, einer Senderadresse, einem Kommunikationsstatus, der Information über die erste Zeitspanne, gegebenenfalls auch einer Information über die zweite Zeitspanne, den eigentlichen Daten und vorteilhaft einer abschließenden Kontrollinformation.

Hat ein Einzelgerät Daten an das zentrale Steuer- bzw. Regelgerät abzusetzen, so sendet es ein entsprechendes Datenpaket ab und schaltet dann für die bestimmte erste Zeitspanne auf Empfang. Vorteilhaft sendet das zentrale Steuer- bzw. Regelgerät anschließend ein Quittungs-Telegramm. Damit wird erreicht, daß das sendende Einzelgerät Kenntnis erhält, daß sein Datenpaket empfangen worden ist. Vorteilhaft ist es, wenn das Einzelgerät nach Empfang und Erkennen des Quittungs-Telegramms seine Empfangseinrichtung sofort abschaltet und nicht während der gesamten ersten Zeitspanne eingeschaltet läßt. Damit kann zusätzlich Batterieenergie gespart werden.

Ein echter Zweiwege-Datenverkehr läuft folgendermaßen ab: Das Einzelgerät sendet an das zentrale Steuer- bzw. Regelgerät ein Datenpaket. Unmittelbar anschließend, während der ersten Zeitspanne, sendet das zentrale Steuer- bzw. Regelgerät seinerseits ein Datenpaket an das Einzelgerät ab. Den Daten kann eine Quittungsmeldung folgen, wenn vorgesehen ist, daß das Einzelgerät nach dem Quittungssignal seine Empfangsvorrichtung abschaltet.

Vorteilhaft ist, wenn das Einzelgerät auch dann ein Datenpaket an das zentrale Steuer-bzw. Regelgerät absendet, wenn es an sich keine Daten zu liefern hat. Dadurch wird ermöglicht, daß das zentrale Steuer- bzw. Regelgerät seinerseits während des durch die erste Zeispanne gegebenen Empfangs-Zeitfensters des Einzelgeräts Daten an das Einzelgerät senden kann. Ein solches Datenpaket des zentralen Steuer- bzw. Regelgerätes kann auch eine Datenanfrage an das Einzelgerät enthalten. In der Folge sendet anschließend das Einzelgerät die verlangten Daten und erhält schließlich vom zentralen Steuer- und Regelgerät das Quittungssignal.

Allen Varianten des Datenverkehrs ist gemeinsam, daß der Dialog vom Einzelgerät begonnen und vom zentralen Steuer- bzw. Regelgerät abgeschlossen wird.

Die weitere Ausgestaltung der Erfindung bietet je nach Anwendungsgebiet vielfältige Möglichkeiten. Bei einer kleinen Zahl von Einzelgeräten kann es zweckmäßig sein, den einzelnen Einzelgeräten feste Sendezeiten zuzuweisen. In einem Gebäude 1 mit fünf Räumen 2, deren jeder einen Heizkörper 5 mit einem Stellglied 10 aufweist, wobei aber nur ein Witterungsfühler 8 und nur in einem der Räume 2, dem sogenannten Führungsraum, ein Raumgerät 9 vorhanden ist, ist beispielsweise folgende Sendeordnung vorgesehen: Aller zehn Minuten, zu den Minuten 0, 10, 20 usw. einer Stunde sendet der Witterungsfühler 8. Ebenfalls aller zehn Minuten, jedoch zu den Minuten 1, 11, 21 usw. einer Stunde, sendet das Raumgerät 9. Zu den Minuten 2, 12, 22 usw. sendet das erste Stellglied 10, zu den Minuten 3, 13, 23 usw. das zweite Stellglied 10 und so fort. Damit lassen sich Konflikte vermeiden, die dann entstehen, wenn zwei Einzelgeräte gleichzeitig Datenpakete senden.

Bei Anlagen ohne eine derartige feste Zuordnung einer Sendefolge sind hingegen derartige Konflikte möglich. Diese Konflikte lassen sich in vorteilhafter Weise auf die nachfolgend beschriebene Art und Weise vermeiden. Senden zwei Einzelgeräte mehr oder weniger gleichzeitig, so kann das zentrale Steuer- bzw. Regelgerät die Nachricht nicht als gültige Nachricht erkennen. Das zentrale Steuer- bzw. Regelgerät sendet dann auch keine Antwort, also beispielsweise kein Quittungssignal ab. Dadurch, daß normalerweise vorgesehen ist, daß auf das Absenden eines Datenpaketes von einem Einzelgerät mindestens ein Quittungssignal empfangbar ist, erkennt jedes Einzelgerät, das eine Nachricht gesendet hat, ohne weiteres, daß seine Nachricht vom zentralen Steuer- bzw. Regelgerät nicht empfangen worden ist. Daraufhin sendet jedes Einzelgerät seine Nachricht zeitverzögert erneut ab. Ein erneuter Konflikt wird vorteilhaft dadurch verhindert, daß die Größe der Zeitverzögerung für jedes Gerät unterschiedlich, beispielsweise von der individuellen Adresse des Einzelgerätes abhängig ist. Jedem Einzelgerät wird damit eine unterschiedliche Zeitverzögerung zugeordnet. Auf diese Weise ist es möglich, daß ohne eine zentrale Steuerung des Datenverkehrs selbsttätig ein Zustand erreicht wird, daß jedes Einzelgerät eine freie Zeitspanne für das Absetzen seines Datenpaketes findet. Das zentrale Steuer- und Regelgerät führt vorteilhaft über seinen gesamten Datenverkehr ein Protokoll, insbesondere über die ersten und zweiten Zeitspannen der einzelnen Einzelgeräte, die jeweiligen Kommunikations-Zeitpunkte und etwaige Konflikte. Auf diese Weise kann das zentrale Steuer- bzw. Regelgerät den Datenverkehr selbsttätig optimieren, in dem es für jedes Einzelgerät die Längen der ersten und zweiten Zeitspanne, evtl. auch bestimmte Kommunikationszeitpunkte, festlegt und im folgenden Datenpaket an das Einzelgerät übermittelt. Dadurch ist eine selbsttätige Synchronisation des gesamten Datenverkehrs möglich.

Es kann auch zweckmäßig sein, daß jedes Einzelgerät vor dem Absenden eines Datenpaketes kurzzeitig seine Empfangseinrichtung einschaltet, um zu ermitteln, ob im Moment Datenverkehr herrscht. Das Einzelgerät beginnt das Absenden eines Datenpaketes erst dann, wenn es ermittelt, daß kein Datenverkehr herrscht. Um zu vermeiden, daß ein Einzelgerät mit dem Absenden seines Datenpaketes beginnt, während ein anderes Einzelgerät noch auf das Quittungssignal des zentralen Steuer- und Regelgerätes wartet, ist es zweckmäßig, das Aktivschalten der Empfangseinrichtung eines Einzelgerätes grundsätzlich um eine Zeitspanne zu verlängern, die größer ist als die Pause zwischen dem Sendevorgang eines Einzelgerätes und der anschließenden Antwort des zentralen Steuer- bzw. Regelgerätes. Auf solche Weise läßt sich die Zahl der möglichen Konflikte grundsätzlich verringern.

Eine solche Verringerung ist weiter dadurch möglich, daß dafür gesorgt wird, daß alle Einzelgeräte alle Quittungssignale des zentralen Steuer- bzw. Regelgerätes erkennen können, also nicht nur diejenigen, die für das bestimmte Einzelgerät bestimmt sind.

Vorteilhaft kann es auch sein, wenn das zentrale Steuer- bzw. Regelgerät in den Antworten an die Einzelgeräte jedem der Einzelgeräte eine spezielle Zeitverzögerung zuweist.

In Ausgestaltung der Erfindung sind mannigfache Möglichkeiten realisierbar. So kann beispielsweise bei einer Anlage gemäß der Figur das Raumgerät 9 aller zwei Minuten den Istwert der Raumtemperatur an den Regler 7 übermitteln und aller zehn Minuten zusätzlich den am Raumgerät 9 eingestellten Sollwert der Raumtemperatur. Wird der Sollwert der Raumtemperatur durch den Benutzer verstellt, kann diese Änderung im nächsten Datenpaket an den Regler 7 übermittelt werden.

Aller zehn Minuten kann beispielsweise auch der vom Witterungsfühler 8 an den Regler 7 übermittelte Wert der Außentemperatur vom Regler 7 an das Raumgerät 9 übermittelt und dort angezeigt werden. Es ist auch vorteilhaft, wenn der Regler 7 weitere Daten, etwa Einstellwerte für den Wärmeerzeuger 3 und eventuell auch zusätzlich dessen Istwert der Temperatur an das Raumgerät 9 überträgt. Der Regler 7 erkennt ohne weiteres den Ausfall einer der Komponenten, mit denen er kommuniziert.

Vorteilhafterweise teilen die Stellglieder 10 die aktuellen Stellungen, d.h. den Öffnungsgrad des zugehörigen Ventils, dem Regler 7 auch zu dem Zweck mit, daß der Regler 7 diese Öffnungsgrade bei der Regelung des Wärmeerzeugers 3 berücksichtigt. So kann der Regler 7 den Sollwert der Temperatur des Wärmeerzeugers 3 verringern, wenn sich zeigt, daß die gewünschte Raumtemperatur erreicht ist und die Stellglieder 10 überwiegend nur einen kleinen Öffnungsgrad aufweisen. Umgekehrt kann der Regler 7 den Sollwert der Temperatur des Wärmeerzeugers 3 erhöhen, wenn sich zeigt, daß der Istwert der Raumtemperatur trotz mehrheitlich ganz geöffneter Stellglieder 10 nicht erreicht wird. Dadurch läßt sich eine Verbesserung der Regelung gegenüber der alleinigen Witterungsführung des Wärmeerzeugers 3 erreichen.

Die Anforderungen an die Sendeleistung und an die Empfangsempfindlichkeit sind von den Eigenschaften des Gebäudes und der Anordnung der Komponenten abhängig. Es ist deshalb vorteilhaft, die Geräte werksseitig für eine bestimmte Sendeleistung auszulegen, die allen zu erwartenden Gegebenheiten Rechnung trägt. Um bei batteriegespeisten Geräten Energie zu sparen, ist es vorteilhaft, die Sendeleistung am Einbauort gerade so groß zu wählen, daß eine sichere Kommunikation möglich ist. Vorteilhaft ermittelt das zentrale Steuer-bzw. Regelgerät wenigstens bei der Inbetriebnahme der Anlage die Empfangsfeldstärke für jedes einzelne örtlich getrennte Gerät, berechnet annähernd die für jedes Gerät erforderliche Sendeleistung und teilt den einzelnen Geräten die Größe dieser Sendeleistung mit. Die örtlich getrennten Geräte korrigieren entsprechend die von ihnen abgegebene Sendeleistung. Die Einrichtung adaptiert sich auf diese Weise selbständig an das bestehende Gebäude. Gleichzeitig wird die Reichweite auf das erforderliche Maß begrenzt, so daß Störungen zwischen in benachbarten Gebäuden eingebauten Anlagen gleicher Art verhindert werden können. Der Störungsverhinderung dient auch, wenn die Zahl der möglichen Geräteadressen groß gewählt wird, so daß in benachbarten Gebäude jeweils abweichende Adressen verwendet werden können.

Andererseits ist es auch möglich, für mehrere Anlagen bestimmte Synergien zu nützen. So könnte beispielsweise für mehrere Anlagen ein einziger Witterungsfühler verwendet werden. Dieser sendet dann beispielsweise seine Daten mit mehreren Adressen oder mit einer bestimmten Sammeladresse für mehrere zentrale Steuer- bzw. Regelgeräte.

## Patentansprüche

1. Verfahren zum bidirectionalen Datenaustausch zwischen einem zentralen Steuer- bzw. Regelgerät (7) und örtlich getrennten Geräten (8, 9, 10, 11),
**dadurch gekennzeichnet,**
daß jeder Datenaustausch-Zyklus vom örtlich getrennten Gerät (8, 9, 10, 11) eröffnet wird, indem dieses Gerät (8, 9, 10, 11) ein Datenpaket über Funk an das zentrale Steuer- bzw. Regelgerät (7) sendet, und daß das örtliche getrennte Gerät (8, 9, 10, 11) im Anschluß an die Übermittlung des Datenpakets während einer bestimmten ersten Zeitspanne auf Empfang geschaltet wird und daran anschließend während einer zweiten Zeitspanne bis zum Absenden eines nachfolgenden Datenpakets seine Sende- und Empfangseinrichtung abgeschaltet wird.

2. Verfahren nach Anspruch 1,
**dadurch gekennzeichnet,**
daß in dem vom örtlich getrennten Gerät (8, 9, 10, 11) abgesendeten Datenpaket eine Information enthalten ist, die dem zentralen Steuer- bzw. Regelgerät (7) mitteilt, wie groß die erste Zeitspanne ist, während der das Gerät (8, 9, 10, 11) auf Empfang geschaltet ist.

3. Verfahren nach einem der Ansprüche 1 oder 2,
**dadurch gekennzeichnet,**
daß in dem vom örtlich getrennten Gerät (8, 9, 10, 11) abgesendeten Datenpaket eine Information enthalten ist, die dem zentralen Steuer- bzw. Regelgerät (7) mitteilt, wie groß die zweite Zeitspanne ist, während der die Empfangseinrichtung des Geräts (8, 9, 10, 11) abgeschaltet ist.

4. Verfahren nach einem der vorhergehenden Ansprüche,
**dadurch gekennzeichnet,**
daß die erste Zeitspanne bestimmt ist durch den Zeitbedarf für die Übermittlung des größten vorkommenden Datenpakets.

5. Verfahren nach einem der vorhergehenden Ansprüche,
**dadurch gekennzeichnet,**
daß die Empfangseinrichtung des Geräts (8, 9, 10, 11) in Betrieb bleibt, solange das Gerät (8, 9, 10, 11) das Eintreffen gültiger Daten erkennt.

6. Verfahren nach einem der Ansprüche 1 bis 4,
**dadurch gekennzeichnet,**
daß die Empfangseinrichtung des Geräts (8, 9, 10, 11) abgeschaltet wird, sobald das Gerät (8, 9, 10, 11) ein vom zentralen Steuer- bzw. Regelgerät (7) gesendetes Quittungs-Telegramm empfangen und erkannt hat.

7. Verfahren nach Anspruch 6,
**dadurch gekennzeichnet,**
daß das Gerät (8, 9, 10, 11) beim Ausbleiben des Quittungs-Telegramms des zentralen Steuer- bzw. Regelgeräts (7) sein Datenpaket zeitverzögert erneut absendet.

8. Verfahren nach Anspruch 7,
**dadurch gekennzeichnet,**
daß die Größe der Zeitverzögerung für jedes Gerät (8, 9, 10, 11) unterschiedlich ist.

9. Verfahren nach Anspruch 8,
**dadurch gekennzeichnet,**
daß die Größe der Zeitverzögerung eine Funktion einer Adresse ist, die jedes Gerät (8, 9, 10, 11) individuell kennzeichnet.

10. Verfahren nach einem der Ansprüche 1 bis 6,
**dadurch gekennzeichnet,**
daß das zentrale Steuer- bzw. Regelgerät (7) den einzelnen Geräten (8, 9, 10, 11) Werte für die erste und/oder zweite Zeitspanne übermittelt.

11. Verfahren nach Anspruch 10,
**dadurch gekennzeichnet,**
daß das zentrale Steuer- bzw. Regelgerät (7) aufgrund eines Protokolls des gesamten Datenverkehrs diesen Datenverkehr selbsttätig synchronisiert.

12. Aus mehreren Einzelgeräten (7, 8, 9, 10, 11) bestehende Steuer- bzw. Regeleinrichtung, bei der mindestens ein zentrales Steuer- bzw. Regelgerät (7) mit mindestens einem örtlich getrennten Gerät (8, 9, 10, 11) Daten austauscht, wobei
jedem örtlich getrennten Gerät eine Sende- und Empfangseinrichtung für bidirectionalen Datenaustausch über Funk zugeordnet ist, und
wenigstens ein Teil der örtlich getrennten Geräte (8, 9, 10, 11) batteriebetrieben ist,
**dadurch gekennzeichnet,**
daß die Sende- und Empfangseinrichtung des mindestens einen örtlich getrennten Geräts (8, 9, 10, 11) eingerichtet ist ein Datenpaket über Funk an das zentrale Steuer- bzw. Regelgerät (7) zu senden, um dadurch einen Datenaustausch-Zyklus zu eröffnen,
im Anschluß an die Übermittlung des Datenpakets während einer bestimmten ersten Zeitspanne auf Empfang zu schalten, und
daran anschließend während einer zweiten Zeitspanne bis zum Absenden eines nachfolgenden Datenpakets abzuschalten.

## Claims

1. A method of bidirectional data exchange between a central control or regulating apparatus (7) and locally separated apparatuses (8, 9, 10, 11) characterised in that each data exchange cycle is opened by the locally separated apparatus (8, 9, 10, 11) by said apparatus (8, 9, 10, 11) sending a data packet by way of radio to the central control or regulating apparatus (7) and that the locally separated apparatus (8, 9, 10, 11) is switched to receive subsequent to the transmission of the data packet for a given first period of time and that subsequently thereto its transmitting and receiving device is switched off for a second period of time until a subsequent data packet is dispatched.

2. A method according to claim 1 characterised in that contained in the data packet dispatched by the locally separated apparatus (8, 9, 10, 11) is an item of information which communicates to the central control or regulating apparatus (7) how long is the first period of time during which the apparatus (8, 9, 10, 11) is switched to receive.

3. A method according to one of claims 1 and 2 characterised in that contained in the data packet dispatched by the locally separated apparatus (8, 9, 10, 11) is an item of information which communicates to the central control or regulating apparatus (7) how long is the second period of time during which the receiving device of the apparatus (8, 9, 10, 11) is switched off.

4. A method according to one of the preceding claims characterised in that the first period of time is determined by the amount of time required for transmission of the largest data packet that occurs.

5. A method according to one of the preceding claims characterised in that the receiving device of the apparatus (8, 9, 10, 11) remains in operation as long as the apparatus (8, 9, 10, 11) recognises the arrival of valid data.

6. A method according to one of claims 1 to 4 characterised in that the receiving device of the apparatus (8, 9, 10, 11) is switched off as soon as the apparatus (8, 9, 10, 11) has received and recognised an acknowledgement telegram sent by the central control or regulating apparatus (7).

7. A method according to claim 6 characterised in that in the absence of the acknowledgement telegram from the central control or regulating apparatus (7) the apparatus (8, 9, 10, 11) dispatches its data packet again with a time delay

8. A method according to claim 7 characterised in that the magnitude of the time delay is different for each apparatus (8, 9, 10, 11).

9. A method according to claim 8 characterised in that the magnitude of the time delay is a function of an address which individually characterises each apparatus (8, 9, 10, 11).

10. A method according to one of claims 1 to 6 characterised in that the central control or regulating apparatus (7) transmits to the individual apparatuses (8, 9, 10, 11) values for the first and/or the second period of time.

11. A method according to claim 10 characterised in that on the basis of a protocol of the entire data traffic the central control or regulating apparatus (7) automatically synchronises said data traffic.

12. A control or regulating arrangement which comprises a plurality of individual apparatuses (7, 8, 9, 10, 11) and in which at least one central control or regulating apparatus (7) exchanges data with at least one locally separated apparatus (8, 9, 10, 11), wherein a transmitting and receiving device is associated by way of radio for bidirectional data exchange with each locally separated apparatus and at least a part of the locally separated apparatuses (8, 9, 10, 11) is battery-powered, characterised in that the transmitting and receiving device of the at least one locally separated apparatus (8, 9, 10, 11) is arranged to send a data packet by way of radio to the central control or regulating apparatus (7) in order thereby to open a data exchange cycle, to switch to receive subsequently to the transmission of the data packet for a given first period of time and subsequently thereto to switch off for a second period of time until a subsequent data packet is dispatched.

## Revendications

1. Procédé d'échange bidirectionnel de données entre un appareil central de commande et de réglage (7) et des appareils localement séparés (8, 9, 10, 11),
caractérisé
en ce que chaque cycle d'échange de données est ouvert par l'appareil localement séparé (8, 9, 10, 11), cet appareil (8, 9, 10, 11) envoyant un paquet de données par voie hertzienne à l'appareil central de commande et de réglage (7) et en ce que, à la suite de la transmission du paquet de données, l'appareil localement séparé (8, 9, 10, 11) est branché pendant un premier intervalle de temps déterminé à la réception et ensuite son dispositif émetteur et récepteur est coupé pendant un deuxième intervalle de temps jusqu'à l'envoi d'un paquet suivant de données.

2. Procédé selon la revendication 1,
caractérisé
en ce que le paquet de données envoyé par l'appareil localement séparé (8, 9, 10, 11) contient une information qui communique à l'appareil central de commande et de réglage (7) la longueur du premier intervalle de temps pendant lequel l'appareil (8, 9, 10, 11) est branché à la réception.

3. Procédé selon l'une des revendications 1 ou 2,
caractérisé
en ce que le paquet de données envoyé par l'appareil localement séparé (8, 9, 10, 11) contient une information qui communique à l'appareil central de commande et de réglage (7) la longueur du deuxième intervalle de temps pendant lequel le dispositif récepteur de l'appareil (8, 9, 10, 11) est coupé.

4. Procédé selon l'une des revendications précédentes,
caractérisé
en ce que le premier intervalle de temps est déterminé par le temps nécessaire à la transmission du paquet de données le plus grand qui peut se produire.

5. Procédé selon l'une des revendications précédentes,
caractérisé
en ce que le dispositif récepteur de l'appareil (8, 9, 10, 11) demeure en service aussi longtemps que l'appareil (8, 9, 10, 11) identifie l'arrivée d'entrées valables.

6. Procédé selon l'une des revendications 1 à 4,
caractérisé
en ce que le dispositif récepteur de l'appareil (8, 9, 10, 11) est coupé dès que l'appareil (8, 9, 10, 11) a reçu et identifié un télégramme d'accusé de réception envoyé par l'appareil central de commande et de réglage (7).

7. Procédé selon la revendication 6,
caractérisé
en ce que l'appareil (8, 9, 10, 11) envoie à nouveau son paquet de données à la fin d'un délai en l'absence du télégramme d'accusé de réception de l'appareil central de commande et de réglage (7).

8. Procédé selon la revendication 7,
caractérisé
en ce que la longueur du délai est différente pour chaque appareil (8, 9, 10, 11).

9. Procédé selon la revendication 8,
caractérisé
en ce que la longueur du délai est une fonction d'une adresse qui caractérise individuellement chaque appareil (8, 9, 10, 11).

10. Procédé selon l'une des revendications 1 à 6,
caractérisé
en ce que l'appareil central de commande et de réglage (7) transmet aux appareils individuels (8, 9, 10, 11) des valeurs du premier et/ou du deuxième intervalle de temps.

11. Procédé selon la revendication 10,
caractérisé
en ce que l'appareil central de commande et de réglage (7) synchronise automatiquement le trafic de données sur la base d'un protocole de l'ensemble de ce trafic de données.

12. Dispositif de commande et de réglage se composant de plusieurs appareils individuels (7, 8, 9, 10, 11), dans lequel au moins un appareil central de commande et de réglage (7) échange des données avec au moins un appareil localement séparé (8, 9, 10, 11), un dispositif émetteur et récepteur d'échange bidirectionnel de données par voie hertzienne étant associé à chaque appareil localement séparé et au moins une partie des appareils localement séparés (8, 9, 10, 11) fonctionnant sur batterie,
caractérisé
en ce que le dispositif émetteur et récepteur de l'au moins un appareil localement séparé (8, 9, 10, 11) est aménagé pour envoyer un paquet de données par voie hertzienne à l'appareil central de commande et de réglage (7) afin d'ouvrir ainsi un cycle d'échange de données,
pour être branché à la réception à la suite de la transmission du paquet de données pendant un premier intervalle de temps déterminé et
ensuite pour couper le circuit pendant un deuxième intervalle de temps jusqu'à l'envoi d'un paquet suivant de données.
